# EUROPEAN PATENT SPECIFICATION

(11) **EP 0 296 849 B1**
(45) Date of publication and mention of the grant of the patent: **07.01.1993**
(21) Application number: 88305724.2
(22) Date of filing: 23.06.1988
(51) Int. Cl.: A23F 3/30, A23F 3/22

(54) **Process for the preparation of an instant tea product**
Verfahren zur Herstellung eines Instant-Teeproduktes
Procédé de préparation d'un thé instantané

(30) Priority: 26.06.1987 GB 8714974
(43) Date of publication of application: 28.12.1988
(73) Proprietor: UNILEVER PLC, London EC4P 4BQ (GB); UNILEVER N.V., 3013 AL Rotterdam (NL)
(72) Inventor: Hoogstad, Bruin, Bedford MK41 5 RH (GB); Kamhawi, Roula Abdel Salam Rafiq, Wellingborough Northants NN8 3PE (GB)
(74) Representative: Roscoe, Brian Corrie

(56) References cited:
- EP-A- 0 120 561
- FR-A- 958 011
- GB-A- 534 359
- XVIII INTERNATIONAL DAIRY CONGRESS, vol. 1E, Sydney, 12th-16th October 1970, page 455; M.R. SRINIVASAN et al.: "Studies on production, packaging and storage of 'Tea Complete' - A formulated product consisting of tea, milk solids and sugar"
- PATENT ABSTRACTS OF JAPAN, vol. 10, no. 71 (C-334)[2128], 20th March 1986
- PATENT ABSTRACTS OF JAPAN, vol. 8, no. 106 (C-223)[1543], 18th May 1984
- FOOD SCIENCE & TECHNOLOGY, Abstracts no. 81-04-p0577 (81021164); J. BLATTNA: "Selected products for feeding infants and children"

## Description

The present invention relates to a process for the preparation of a particulate instant tea product comprising (a) from 2 to 25% by weight of fat, (b) from 5 to 25% by weight of an edible proteinaceous emulsifying material, (c) from 10 to 40% by weight of a hydrolysed starch, (d) from 10 to 40% by weight of tea solids, (e) from 0 to 30% by weight of milk sugar and (f) from 0 to 10% by weight of water. The product of this process, upon reconstitution with water, gives a beverage which is in taste and appearance similar to tea with milk.

The use of an instant tea product which comprises a creaming or a whitening agent entails several advantages. First of all, the combination of a whitener and tea solids in one product requires only one drying step in its manufacture instead of two drying steps in the separate manufacture of instant tea and powdered whiteners. The combination of tea and whitener in one product further results in a better dispersibility and better consumer appeal. A third advantage is the avoidance of segregation of the components which often occurs when separate components are used. A fourth advantage is the easier handling of the combined product in the factory, since only one ingredient has to be packed instead of two ingredients.

Up to now several attempts have been made to prepare a combined instant product of tea and whitener. GB 534,359 (S.G. van Wijk) describes a process to prepare a combined dried product of tea, milk and eventually sweeteners and a pH adjuster. This process has the disadvantage that it either suffers from curdling of the milk constituents or its needs the incorporation of a pH adjuster such as sodium hydroxide which negatively affects the taste of the final product.

M.R. Srinivasan et al., in "Studies on production packaging and storage of 'tea complete', a formulated product consisting of tea, milk solids and sugar," International Dairy Congress (18th Sydney), 455 (1970) describes the production of an instant tea-complete containing tea, milk solids and sugar. The final product, however, does not have a rich tea flavour and has a relatively short shelf life while packed in polycoated pouches. A further disadvantage of this product is that it contains a considerable amount of sugar which results in a very sweet product.

Furthermore, it has been found that a combined product of tea and milk often suffers from the fact that, during drying and storage, the milk protein reacts with polyphenols from the tea to give an orange-coloured sediment upon reconstitution, and a decrease in taste due to the decreased amount of polyphenols in the final beverage. It is believed that the products prepared according to GB 534,359 and M.R. Srinivasan also display this sedimentation.

In European Patent Application EP-A-0,120,561 (General Foods Corp.) a tea beverage has been described, which comprises tea solids, acidulants, maltodextrin and aspartylphenylalanine methylester (APM). This product is prepared by an agglomeration process, in which first a dry mixture is prepared, which is almost immediately fluidized, whilst an aqueous colouring agent solution is sprayed onto the fluidised bed. Hereafter the product is dried with hot air being used as the fluidizing gas. The maltodextrin used in the examples of this EP-A-0,120,561 clearly functions as a flavour carrier in which the often heat-sensitive flavours are encapsulated or incorporated.

In Japanese Patent Application JP-A-60-210,949 (Satou Shiyokuhin Kogyo KK) a process has been described for preparing instantly soluble, hollow granular instant tea.

In this process a solution is formed from tea extract and hydrolysed starch, having an average polymerisation degree of 4-10. In this solution 0.25-2.5 wt% of carbon dioxide gas is dissolved, the mixture is cooled and then spray-dried using a pressure nozzle-type sprayer. The hydrolysed starch serves as a carrier material and the conjoint use with carbon dioxide leads to the formation of hollow granules, which rapidly reconstitute with water.

It has now been found to be possible to combine the creamer or whitener and the tea solids in one product without the above-mentioned disadvantages, using a process in which fat, edible proteinaceous emulsifying material, hydrolyzed starch, tea solids, and optionally milk sugar are mixed with water, the mixture having a certain moisture content is homogenized and then freeze-dried.

Therefore, the present invention relates to a process for the preparation of a particulate instant tea product comprising:
(a) from 2 to 25% by weight of fat,
(b) from 5 to 15% by weight of an edible emulsifying proteinaceous material,
(c) from 10 to 40% by weight of a hydrolyzed starch,
(d) from 10 to 40% by weight of tea solids,
(e) from 0 to 10% by weight of water and
(f) from 0 to 30% by weight of milk sugar,
which comprises the steps of homogenizing a mixture of (a), (b), (c), (d) and optionally (e) in water, the said mixture having a moisture content of 50-80% by weight and then drying the homogenized mixture by means of freeze-drying.

The fat in the instant tea product according to the present invention is finely divided to effect whitening when dispersed in the water. Preferably from 10 to 20% by weight of fat is used. The fat may comprise fat fractions, partially or completely hydrogenated oils or fats, interesterified fats and mixtures thereof.

The fat preferably has a Wiley melting point (Analysis and Characteristic of Oils, Fats & Fat Product Ed.H.A.Boekenoogen, Interscience Publishers 1964 page 171) of 30°C to 45°C.

For instant tea it may be advantageous to use butterfat which gives a creamy taste to the reconstituted product.

The edible emulsifying proteinaceous material may, for instance, be skimmed milk powder; alkali metal caseinate, of which the sodium caseinate is preferred; ammonium caseinate; oilseed protein concentrate, like soybean protein concentrate; oilseed protein isolate, like soybean isolates or enzyme-modified soybean isolates; single cell protein, fungal protein; succinylated proteins, like succinylated whey protein; whey protein or whey solids; or mixtures thereof.

If skimmed milk powder is used as the proteinaceous material, it is preferred to adjust the amount of fat such that the ratio of fat to skimmed milk is equal to the ratio of fat to milk in full fat milk. If this is the case, it can be convenient to use milk or condensed milk as the combined source of fat and protein.

The term "hydrolyzed starches" encompasses glucose syrup solids, corn syrup solids and maltodextrins. They are characterized by their dextrose equivalent (D.E.). The dextrose equivalent is the total amount of reducing sugars present in per cent of total dry substance, expressed as dextrose. The selection of the type of hydrolyzed starch in the present invention is mainly made on the basis of two criteria, viz, the taste and the speed of dissolution. With regard to the taste, one may distinguish between sweet and non-sweet products. Generally, the products with a higher D.E. have a sweeter taste, and these are therefore preferred for use in the instant tea according to the present invention if a more sweet tea is desired. The second criterion is the speed of dissolution and it can be stated that the maltodextrins with a low D.E., i.e. at most 30, are only relatively slowly dissolving, whereas e.g. glucose is rapidly dissolving.

For instantly dispersing tea powder, penetration of the liquid into the interstices of the powder is almost instantaneous. Once the powder is wetted, the hydration further depends on the nature of the material. If, for instance, this contains a low D.E. maltodextrin, which dissolves only relatively slowly, it will take longer to hydrate than if the material is mainly dextrose. Thus, by varying the composition of the material, the hydration of the fat and tea solids can be controlled to meet product requirements.

In the sweet products the hydrolyzed starch can also at least partially be replaced by dextrose, lactose or normal cane sugar and the expression "hydrolyzed starch" for the purpose of the present invention also encompasses mixture of hydrolyzed starch with dextrose, lactose and cane sugar, provided the ratio of hydrolyzed starch to other sugars is more than 0.5:1.

Preferably the hydrolyzed starch has a dextrose equivalent (D.E.) of at most 40. More preferred is a D.E. from 5-20. The amount of hydrolyzed starch is preferably from 20-30% by weight.

The amount of tea solids is preferably from 20-30% by weight. The expression "tea solids" means all solid components obtained from tealeaves, including for example tea dust, dried extract, from black or green tea, dried extracts from decaffeinated tea, etc. For obtaining an instant tea product which upon reconstitution with hot water readily gives a tea-like beverage, it is preferred that more than 90% of the tea solids are hot-water-soluble. For obtaining a cold-water-soluble tea product it is preferred that more than 90% by weight of the tea solids are cold water-soluble. If a cold-water-soluble instant tea is desired, it is also preferred to use a fat having a low melting point, e.g. between 5 and 10°C.
The milk sugar is preferably lactose.

In a preferred embodiment of the present invention the instant tea product also serves as a carrier material for flavouring or aromatizing materials. The product therefore may comprise up to 20% by weight of a flavouring or aromatizing material, particularly those flavour materials which are commonly used in flavoured tea such as bergamot oil, blackcurrant, cinnamon, strawberry, peppermint oil, lemon, orange, etc. As a matter of fact, it is also possible to include precursors of said flavouring materials which, either during manufacture of the instant tea product or upon reconstitution of the product in water, give rise to the development of the flavouring material. Also artificial sweeteners may be used as a flavouring material.

The instant tea product may also comprise from 0 to 10% by weight of water. For avoiding growth of yeasts and bacteria, it is furthermore preferred to establish a water activity (A_{w}) below 0.80. Normally, for products comprising maltodextrins having a D.E. value of less than 40, the water activity of products containing less than 10% moisture is well below 0.80.

The instant tea product may also comprise up to 5% by weight of functional additives such as colouring agents (e.g. titanium dioxide), anti-caking agents (like sodium silicoaluminate), preservatives, vitamins, minerals or mixtures of any two or more of these additives.

To avoid degradation reactions it is preferred that the mixture is prepared and homogenized at a temperature of at most 65°C.

The drying step is carried out by freeze-drying. The mixture has a water content of 50-80% by weight to minimise the energy required for drying while enhancing the flow characteristics of the mixture.

The invention will now be illustrated by the following Example.

### Example 1

A tea extract was prepared by extracting black tea with water, having a temperature of 60°C, for 30 minutes while the weight ratio of tea to water was 1:10. The tea extract was subsequently concentrated by reverse osmosis at 60°C until a concentrated tea extract with a solids content of 16% by weight was obtained. 500 ml of this extract was mixed with 80 g maltodextrin, having a dextrose equivalent of 15, and 500 ml of condensed milk having a solids content of 31% by weight at a temperature of 50°C. The mixture was homogenized for 5 minutes in a simple mixer at a temperature of 50°C. The resulting mixture was frozen on a drum freezer in a layer of 2 mm for a period of 20 s and subsequently disrupted and freeze-dried at -40°C until the moisture content of the product was 3% by weight. The end product was reconstituted into a cup of tasteful tea with milk by adding hot water to a spoonful of the instant tea (1,5 g). A tasteful cup of tea without any off-flavour or sedimentation was obtained.

## Claims

1. A process for the preparation of a particulate instant tea product comprising (a) from 2 to 25% by weight of fat, (b) from 5 to 25% by weight of an edible proteinaceous emulsifying material, (c) from 10 to 40% by weight of a hydrolysed starch, (d) from 10 to 40% by weight of tea solids, (e) from 0 to 30% by weight of milk sugar and (f) from 0 to 10% by weight of water, which comprises the steps of homogenizing a mixture of (a), (b), (c), (d) and optionally (e) in water, the said mixture having a moisture content of 50-80% by weight, and then drying the homogenized mixture by means of freeze-drying.

2. A process according to Claim 1, in which the fat has a Wiley melting point of 30°C to 45°C.

3. A process according to Claims 1 or 2, in which the fat is butterfat.

4. A process according to Claims 1-3, in which the edible emulsifying proteinaceous material is selected from the group consisting of skimmed milk powder, alkali metal caseinate, ammonium caseinate, oilseed protein concentrate, oilseed protein isolate, single cell protein, fungal protein, whey protein or whey solids, succinylated proteins or mixtures thereof.

5. A process according to Claim 4 in which the edible emulsifying proteinaceous material is skimmed milk powder and in which the ratio of fat to skimmed milk powder in the instant tea is equal to the ratio of fat to skimmed milk in milk.

6. A process according to Claims 1-5, in which the hydrolysed starch has a dextrose equivalent (D.E.) of at most 40.

7. A process according to Claims 1-6, in which more than 90% by weight of the tea solids are hot-water-soluble.

8. A process according to Claims 1-6, in which more than 90% by weight of the tea solids are cold-water-soluble.

## Patentansprüche

1. Verfahren zum Herstellen eines teilchenförmigen Instantteeproduktes umfassend
(a) 2 bis 25 Gew.% Fett,
(b) 5 bis 25 Gew.% eines eßbaren proteinhaltigen Emulgiermaterials,
(c) 10 bis 40 Gew.% einer hydrolysierten Stärke,
(d) 10 bis 40 Gew.% Teefeststoffe,
(e) 0 bis 30 Gew.% Milchzucker und
(f) 0 bis 10 Gew.% Wasser,
das die Schritte des Homogenisierens einer Mischung von (a), (b), (c), (d) und gegebenenfalls (e) in Wasser, wobei die Mischung einen Feuchtigkeitsgehalt von 50 bis 80 Gew.% aufweist, und des anschließenden Trocknens der homogenisierten Mischung durch Gefriertrocknen umfaßt.

2. Verfahren nach Anspruch 1, in dem das Fett einen Wiley-Schmelzpunkt von 30 bis 45°C aufweist.

3. Verfahren nach Anspruch 1 oder 2, in dem das Fett Butterfett ist.

4. Verfahren nach den Ansprüchen 1 bis 3, in dem das eßbare proteinhaltige Emulgiermaterial ausgewählt ist aus der Gruppe bestehend aus Magermilchpulver, Alkalimetallcaseinat, Ammoniumcaseinat, Ölsamenproteinkonzentrat, Ölsamenproteinisolat, Einzellerprotein, Pilzprotein, Molkenprotein oder Molkenfeststoffen, succinylierten Proteinen oder Mischungen hievon.

5. Verfahren nach Anspruch 4, in dem das eßbare proteinhaltige Emulgiermaterial Magermilchpulver ist und in dem das Verhältnis von Fett zu Magermilchpulver im Instanttee gleich dem Verhältnis von Fett zu Magermilch in Milch ist.

6. Verfahren nach den Ansprüchen 1 bis 5, in dem die hydrolysierte Stärke ein Dextroseäquivalent (D.E.) von höchstens 40 aufweist.

7. Verfahren nach den Ansprüchen 1 bis 6, in dem mehr als 90 Gew.% der Teefeststoffe in heißem Wasser löslich sind.

8. Verfahren nach den Ansprüchen 1 bis 6, in dem mehr als 90 Gew.% der Teefeststoffe in kaltem Wasser löslich sind.

## Revendications

1. Un procédé de préparation d'un thé instantané en particules comprenant (a) de 2 à 25% en masse de matière grasse, (b) de 5 à 25% en masse d'un matériau émulsifiant protéiné comestible, (c) de 10 à 40% en masse d'un amidon hydrolysé, (d) de 10 à 40% en masse de solides de thé, (e) de 0 à 30% en masse de sucre de lait (f) de 0 à 10% en masse d'eau, qui comprend les étapes consistant à homogénéiser un mélange de (a), (b), (c), (d) et de façon optionnelle (e) dans de l'eau, ledit mélange ayant une teneur en humidité de 50 à 80% en masse, puis à sécher le mélange homogénéisé par lyophilisation.

2. Un procédé selon la Revendication 1, dans lequel la matière grasse a un point de fusion Wiley de 30°C à 45°C.

3. Un procédé selon la Revendication 1 ou 2, dans lequel la matière grasse est de la matière grasse de beurre.

4. Un procédé selon les Revendications 1 à 3, dans lequel le matériau émulsifiant protéiné comestible est choisi à partir du groupe composé de poudre de lait écrémé, de caséinate de métal alcalin, de caséinate d'ammonium, de concentré de protéine de graines oléagineuses, d'isolat de protéine de graines oléagineuses, de protéine à cellule unique, de protéine fongique, de protéine de lactosérum ou de solides de lactosérum, de protéines succinylées ou de mélanges de ceux-ci.

5. Un procédé selon la Revendication 4, dans lequel le matériau émulsifiant protéiné comestible est de la poudre de lait écrémé et dans lequel la rapport entre la matière grasse et la poudre de lait écrémé dans le thé instantané est égal au rapport entre la matière grasse et le lait écrémé dans le lait.

6. Un procédé selon les Revendications 1 à 5, dans lequel l'amidon hydrolysé a un équivalent dextrose (D.E.) d'au plus 40.

7. Un procédé selon les Revendications 1 à 6, dans lequel plus de 90% en masse des solides de thé sont solubles dans l'eau chaude.

8. Un procédé selon les Revendications 1 à 6, dans lequel plus de 90% en masse des solides de thé sont solubles dans l'eau froide.
